Europäisches Patentamt

European Patent Office

Office européen des brevets

(19)

(11) Veröffentlichungsnummer: **0 329 800 B1**

(12) # EUROPÄISCHE PATENTSCHRIFT

(45) Veröffentlichungstag der Patentschrift: **29.04.92**

(21) Anmeldenummer: **88102610.8**

(22) Anmeldetag: **23.02.88**

(51) Int. Cl.⁵: **F16K 3/34**, F16K 3/08

(54) Ventiloberteil.

(43) Veröffentlichungstag der Anmeldung:
**30.08.89 Patentblatt 89/35**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
EP-A- 296 945       DE-A- 3 239 925
DE-A- 3 533 656      FR-A- 370 965
FR-A- 1 590 229      FR-A- 2 506 886
GB-A- 2 064 727      GB-A- 2 070 738
US-A- 2 247 227      US-A- 4 453 567

(73) Patentinhaber: **Flühs Drehtechnik GmbH.
Lösenbacher Landstrasse 2
W-5880 Lüdenscheid 6(DE)**

(72) Erfinder: **Lange, Peter
Teutonenstrasse 80 b
W-5880 Lüdenscheid(DE)**

(74) Vertreter: **Dörner, Lothar, Dipl.-Ing.
Stresemannstrasse 15
W-5800 Hagen 1(DE)**

EP 0 329 800 B1

## Beschreibung

Technisches Gebiet:

Die Erfindung betrifft ein Ventiloberteil für Sanitärarmaturen mit einem hülsenartigen Kopfstück, an dessen dem Wasserzulauf zugewandter Stirnseite eine Halterung für einen ersten, mit einer Durchtrittsöffnung versehenen Ventilkörper aus keramischem Material vorgesehen ist, und mit einem in dem Kopfstück drehbaren Mitnehmer, an dessen dem Wasserzulauf Zugewandter Stirnseite ein zweiter mit einer Durchtrittsöffnung versehener als Ventilsitzscheibe aus keramischem Material ausgebildeter Ventilkörper vorgesehen ist, der an der dem Wasserzulauf abgewandten Seite an dem ersten Ventilkörper anliegt und dessen Durchtrittsöffnung durch Drehen des Mitnehmers öffnet oder schließt, wobei die Durchtrittsöffnung der zweiten Ventilsitzscheibe mit einem von der beim Öffnen zuerst von der Durchtrittsöffnung des ersten Ventilkörpers überstrichenen Kante ausgehenden Ansatz versehen ist, der ringförmig ausgebildet ist.

Stand der Technik:

Ein Ventiloberteil der vorgenannten Art ist aus US-A-4 453567 bekannt. Bei ihm besteht der erste Ventilkörper aus einem Rohrstück mit nur einer zylindrischen Durchtrittsöffnung. Der zweite als Ventilsitzscheibe ausgebildete Ventilkörper weist ebenfalls nur eine Öffnung auf, die als Ring mit außen angesetztem Halbzylinder definierbar ist. Der Ring steht innen zu beiden Seiten des Hohlzylinders vor. Durch die Verwendung nur jeweils einer Öffnung in jedem der Ventilkörper ist die maximal durchlässige Wassermenge begrenzt; ebenso die Feinfühligkeit der Steuerung der Sanitärarmatur wegen der Ansätze nahe der Drehachse des Mitnehmers.

Bei dem Ventiloberteil nach der älteren EP-A1-0 296 954 sind zwei Ventilsitzscheiben vorgesehen. Jede Ventilsitzscheibe weist nur eine Öffnung auf. In der drehbaren Ventilsitzscheibe hat die Öffnung die Form eines nach außen offenen Sektors. In der ruhenden Ventilsitzscheibe hat die Öffnung die Form eines Kreissegments, dessen eines Ende in der Verlängerung des Kreisbogens in einen spiralförmigen Ansatz übergeht.

Bei dem aus EP-B1-0 088 334 bekannten Ventiloberteil weist jede Ventilsitzscheibe zwei diametral sich gegenüberliegende sektorförmige Öffnungen auf, von denen jede einen Öffnungswinkel von ca. 90° hat. In Öffnungsstellung liegen die Öffnungen der ersten Ventilsitzscheibe deckungsgleich mit denen der zweiten Ventilsitzscheibe übereinander. In Schließstellung liegen die Öffnungen der ersten Ventilsitzscheibe um ca. 90° versetzt gegenüber den Öffnungen der zweiten Ventilsitzscheibe. Das bekannte Ventiloberteil hat den Nachteil, daß schon mit Beginn der Öffnungsstellung relativ viel Wasser von den beiden Ventilsitzscheiben durchgelassen wird. Z.B. im Laborbetrieb ist es aber wünschenswert, Wasser "tropfenweise", also in geringsten Mengen, entnehmen zu können.

Es sind noch weitere Ventilsitzscheibenpaare und Schieber mit den unterschiedlichsten Durchtrittsöffnungen bekannt. Bei der GB-A-2 064 727 weist die drehbare Ventilsitzscheibe eine Öffnung auf, die entweder die Umrisse einer Archimedischen Spirale oder ausgehend von einer kreisförmigen zentralen Öffnung zwei sichelförmige, radial abstrebende Schlitze hat; die ruhende Ventilsitzscheibe besteht entweder aus einem Teilring oder aus den sichelförmigen Schlitzen angepaßten Öffnungen. Bei dem Schieber nach der FR-A-1 590 229 ist eine kreisförmige Öffnung vorgesehen, die an einer Stelle ihres Umfangs einen keilförmigen Vorsprung aufweist. Bei dem Schieber nach der US-A-2 247 227 ist eine halbkreisförmige Öffnung vorgesehen, die an der den Durchmesser bildenden Kante mit einem schwanzartigen Vorsprung versehen ist.

Darstellung der Erfindung:

Der Erfindung liegt die Aufgabe zugrunde, auch ein Ventiloberteil der eingangs genannten Art so auszubilden, daß es sowohl fein als auch grob steuerbar ist, nämlich einerseits Wasser in kleinsten Mengen - tropfenweiseabgegeben werden kann, andererseits aber auch die bei Wannenfüll- und Brausebatterien gestellte Bedingung erfüllt wird, wonach in Offenstellung bei 3 bar 30 1/min. Wasser abgegeben werden müssen; das geräuscharm ist und symmetrisches Verschleißverhalten zeigt. Gemäß der Erfindung wird diese Aufgabe dadurch gelöst, daß auch der erste Ventilkörper als Ventilsitzscheibe ausgebildet ist, in der ebenso wie in der zweiten Ventilsitzscheibe zwei diametral sich gegenüberliegende sektorförmige Durchtrittsöffnungen vorgesehen sind, und daß der ringförmige Ansatz, der an wenigstens einer der Durchtrittsöffnungen der ersten oder der zweiten Ventilsitzscheibe angeformt ist, die Verlängerung der äußeren Begrenzung der sektorförmigen Durchtrittsöffnungen bildet.

Beim Drehen des Ventiloberteils nach der Erfindung aus der Schließstellung in die Offenstellung gelangt zuerst der Ansatz der Öffnung in der einen Ventilsitzscheibe in den Bereich der Öffnung der anderen Ventilsitzscheibe. Dabei wird nur ein minimaler Durchtrittsquerschnitt frei. In der Anfangsstellung ist also eine feine Steuerung der Menge des durchtretenen Wassers möglich. Beim Weiterdrehen des Ventiloberteils kommen nach und nach die Öffnungen in beiden Ventilsitzscheiben zur Deckung. Letztlich ist in der Stellung, in der die Deckung der Öffnungen in den Ventilsitzscheiben erreicht ist, der Ansatz an der Öffnung der einen Ventilsitzscheibe von der anderen Ventilsitzscheibe abgedeckt. Jetzt steht der volle Durchtrittsquerschnitt zur Verfügung.

Der Ansatz kann entweder an Öffnungen der ruhenden oder an Öffnungen der drehbaren Ventilsitzscheibe angebracht sein; es kann aber auch ein Ansatz sowohl an Öffnungen der drehbaren als auch an Öffnungen der ruhenden Ventilsitzscheibe angebracht sein.

Bevorzugte Ausgestaltungen und Weiterbildungen der Erfindung sind in den Unteransprüchen angegeben.

Kurze Beschreibung der Zeichnung:

Ein Ausführungsbeispiel der Erfindung ist in der Zeichnung dargestellt und wird im folgenden näher beschrieben. Es zeigen:

Fig. 1 ein Ventiloberteil im Längsschnitt;

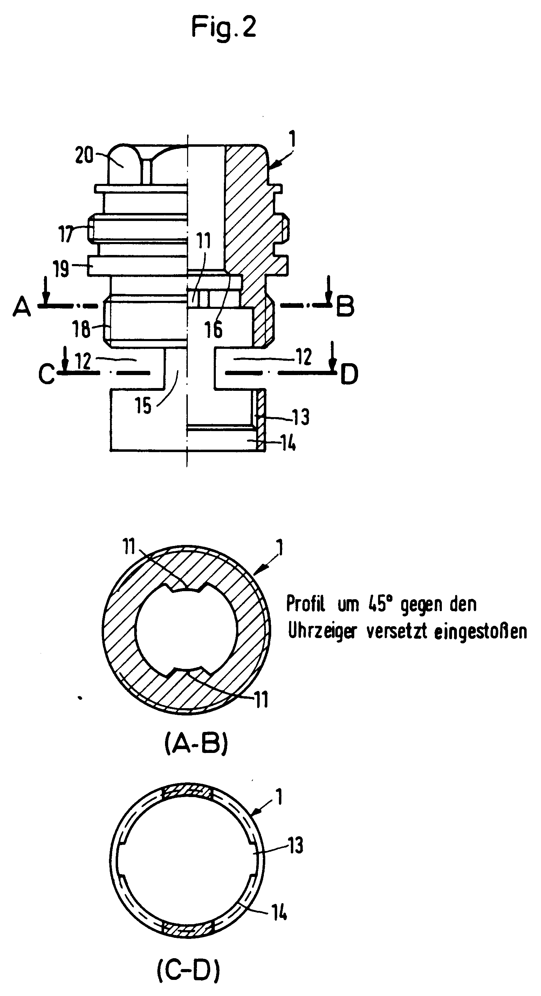

Fig. 2 das bei dem in Fig. 1 dargestellten Ventiloberteil verwendete Kopfstück in Seitenansicht, Längsschnitt sowie zwei Querschnitten;

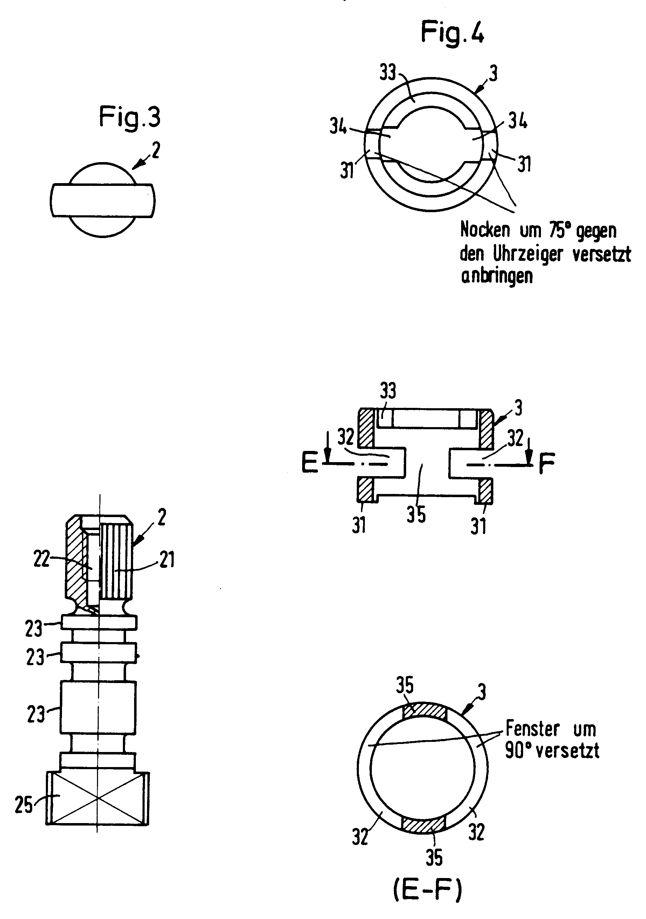

Fig. 3 die bei dem in Fig. 1 dargestellten Ventiloberteil verwendete Spindel in Seitenansicht, teilweise Längsschnitt sowie einer Stirnansicht;

Fig. 4 den bei dem in Fig. 1 dargestellten Ventiloberteil verwendeten Mitnehmer im Längsschnitt, einer Stirnansicht sowie einem Querschnitt;

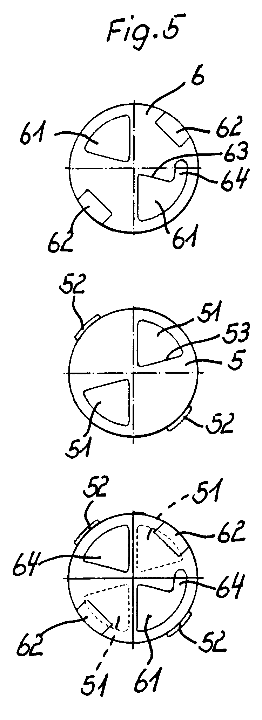

Fig. 5 die bei dem in Fig. 1 dargestellten Ventiloberteil verwendete drehbare Ventilsitzscheibe, die zugehörige feststehende Ventilsitzscheibe sowie die aneinanderliegenden Ventilsitzscheiben in Schließstellung jeweils in Stirnansicht.

Bester Weg zur Ausführung der Erfindung:

Das als Ausführungsbeispiel gewählte Ventiloberteil weist ein Kopfstück 1, eine das Kopfstück 1 mittig durchsetzende und in ihm radial geführte Spindel 2 sowie einen mit der Spindel 2 formschlüssig verbundenen und im Kopfstück 1 radial geführten Mitnehmer 3 auf. Das Ventiloberteil wird in ein Gehäuse 4 einer Sanitärarmatur geschraubt, von der nur ein Teil des Wasserzulaufkanals dargestellt ist. Das Kopfstück 1 ist hülsenartig ausgebildet, besteht also aus einem symmetrischen Hohlkörper, allerdings mit unterschiedlichen Innendurchmessern, dessen beide Stirnflächen offen sind. Wasserzulaufseitig weist das Kopfstück 1 im Bereich der Stirnseite eine Halterung für eine erste Ventilsitzscheibe 5 und einen über die Stirnseite vorstehenden Dichtring 7 auf. Auf der dem Wasserzulauf zugewandten Stirnseite des Mitnehmers 3 ist eine zweite Ventilsitzscheibe 6 vorgesehen.

Die Ventilsitzscheibe 5 ist in der Ansicht kreisförmig. Sie weist zwei sich diametral gegenüberliegende sektorförmige Durchtrittsöffnungen 51 auf. Mittig in der Symmetrieebene zwischen den Durchtrittsöffnungen 51 sind radiale Vorsprünge 52 an der Ventilsitzscheibe 5 vorgesehen.

Im Anschluß an die Stirnseite sind in dem Kopfstück 1 Durchtrittsöffnungen 12 vorgesehen. Zur Halterung ist die Innenwandung des Kopfstücks 1 im Anschluß an die zulaufseitige Begrenzung der Durchtrittsöffnungen 12 mit in Längsrichtung verlaufenden Ausnehmungen 13 für die Aufnahme der radialen Vorsprünge 52 am Rand der keramischen Ventilsitzscheibe 5 und am freien Ende mit einer ringförmigen Ausnehmung 14 für die Aufnahme des Dichtungsrings 7 versehen. Die Durchtrittsöffnungen 12 in dem Kopfstück 1 sind von einem ringförmigen Schlitz gebildet, der durch zwei Längsstege 15 unterteilt ist. Auf der dem Wasserzulauf abgewandten Seite der Durchtrittsöffnungen 12 ist das Kopfstück 1 mit zwei Schultern versehen; im Anschluß an die äußere Schulter16 mit sektorförmigen, durch nach innen vorspringende Nasen 11 begrenzte Ausnehmungen.

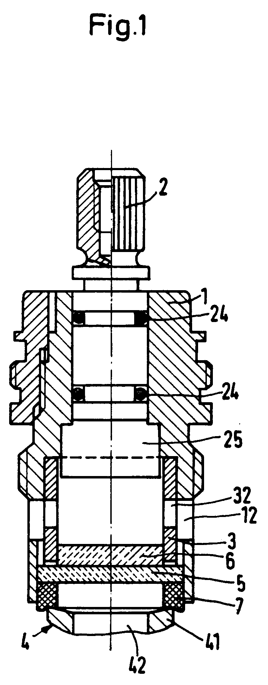

Außen ist im Anschluß an die Durchtrittsöffnungen 12 ein Außengewinde 18 vorgesehen, mit dem das Kopfstück 1 in das Gehäuse 4 einer nicht dargestellten Sanitärarmatur schraubbar ist. Nach dem Einschrauben liegt ein etwa mittig angeordneter Außenflansch 19 des Kopfstücks 1 auf dem Gehäuse 4 der Sanitärarmatur auf. Liegt der Abstand zwischen Unterseite des Außenflansches 19 und Ventilsitz im Gehäuse 4 nicht genau fest, ist es vorteilhaft, das Kopfstück 1 zweiteilig auszuführen und die Teile miteinander zu verschrauben, wie es in Fig. 1 links dargestellt ist. Das Einschrauben in die Sanitärarmatur erfolgt mittels eines Außensechskants 20, der auf der dem Wasserzulauf abgewandten Stirnseite des Kopfstücks 1 vorgesehen ist. Zwischen Außensechskant 20 und Außenflansch 19 ist ein weiteres Außengewinde 17 vorgesehen, das der Aufnahme einer nicht dargestellten Abdeckhülse dient. Von dem Außenflansch 19 bis zum Außensechskant 20 ist das Kopfstück 1 innen als Hohlzylinder für die Führung der Spindel 2 ausgebildet. Die Spindel 2 ist im wesentlichen massiv ausgeführt und weist einen Steckkopf auf. Sie ist an ihrer dem Wasserzulauf abgewandten Stirnseite außen als Vielkant 21 ausgeführt und innen mit einem Sackloch 22 mit Innengewinde für die Befestigung eines nicht dargestellten Drehgriffs versehen. Außen sind an der Spindel 2 Ring-flächen 23 vorgesehen, mit der die Spindel 2 in dem Kopfstück 1 radial geführt ist. Die Ringflächen 23 sind durch Nuten unterbrochen, in denen Dichtringe 24 untergebracht sind, die die Dichtung zwischen Spindel 2 und Kopfstück 1 übernehmen. Die Spindel 2 ist in dem Kopfstück begrenzt drehbar. Auf der dem Vielkant 21 entgegengesetzten Seite ist zu diesem Zweck außen an die Spindel 2 ein T-förmiger Quersteg 25 angeformt. Der Quersteg 25 ist zwischen den Nasen 11 in dem Kopfstück 1 drehbar. Der Quersteg 25 liegt mit seiner dem Vielkant 21 zugewandten Fläche an der Schulter 16 des Kopfstücks 1 an.

Der Mitnehmer 3 ist als hohlzylindrische Hülse mit Durchtrittsöffnungen 32 in der Wandung ausgebildet. Der Mitnehmer 3 kann zur Geräuschdämpfung eine nicht dargestellte Platte aus Kunststoff aufnehmen, von der parallele Stifte ausgehen, die in den Hohlraum hineinragen. Die Durchtrittsöffnungen 32 sind von einem ringförmigen Schlitz gebildet, der durch zwei Längsstege 35 unterteilt ist. Die Durchtrittsöffnungen 32 in dem Mitnehmer 3 und die Durchtrittsöffnungen 12 in dem Kopfstück 1 liegen in derselben Querebene. Der ringförmige Schlitz in dem Kopfstück 1 ist in Axialrichtung des Ventiloberteils breiter als der in dem Mitnehmer 3. Die Längsstege 15, 35 sind bei vollständig geöffneten Durchtrittsöffnungen 51 in der ersten Ventilsitzscheibe 5 in derselben Längsmittelebene angeordnet. Auf der dem Wasserzulauf zugewandten Stirnseite ist der Mitnehmer 3 mit Nocken 31 versehen, die in Ausnehmungen 62 am Rand der zweiten Ventilsitzscheibe 6 eingreifen.

Beide Ventilsitzscheiben 5, 6 bestehen aus keramischem Material. Die zweite Ventilsitzscheibe 6 liegt auf der dem Wasserzulauf abgewandten Seite an der ersten Ventilsitzscheibe 5 an. Sie ist mit zwei diametral sich gegenüberliegenden sektorförmigen Durchtrittsöffnungen 61 versehen. Die Größe der Ventilsitzscheiben 5 und 6 ist ebenso wie die ihrer Durchtrittsöffnungen 51 und 61 gleich. Die zweite Ventilsitzscheibe 6 öffnet und schließt die Durchtrittsöffnung 51 der ersten Ventilsitzscheibe 5 durch Drehen der Spindel 2. An einer Kante 63 geht eine der Durchtrittsöffnungen 61 in einen Ansatz 64 über. Der Ansatz 64 ist ringförmig ausgebildet. Die Kante 63 ist diejenige Kante der sektorförmigen Durchtrittsöffnungen 61, die beim Öffnen zuerst die zugeordneten Durchtrittsöffnung 51 der anderen Ventilsitzscheibe 5 überstreicht. Der ringförmige Ansatz 64 bildet die Verlängerung der äußeren Begrenzung der zugeordneten sektorförmigen Durchtrittsöffnung 61. Im Ausführungsbeispiel beträgt der Öffnungswinkel der sektorförmigen Durchtrittsöffnungen 51, 61 ca. 75°. Der anschließende Winkel, über den sich der ringförmige Ansatz 64 erstreckt, beträgt ca. 30°. Im Ausführungsbeispiel beträgt demnach der gesamte Winkel für die Steuerung ca. 105°.

Der der Spindel 2 zugewandte Rand 33 des Mitnehmers 3 ist nach innen eingezogen und mit diametral sich gegenüberliegenden, radial verlaufenden Ausnehmungen 34 versehen, in die der Quersteg 25 der Spindel 2 eingreift. Die lichte Weite des eingezogenen Randes 33 ist kleiner als der Außendurchmesser der Ringflächen 23, deren dem Quersteg 25 benachbarte somit als Anschlag dient. Die Höhe des eingezogenen Randes 33 der hohlzylindrischen Hülse und die Höhe der von den Nasen 11 begrenzten Ausnehmungen in dem Kopfstück 1 sind zusammen gleich der Höhe des Querstegs 25 an der Spindel 2. Das Kopfstück 1 drückt über die erste ortsfeste Ventilsitzscheibe 5 den Dichtring 7 auf einen Ventilsitz 41 im Wasserzulauf 42 des Gehäuses 4. Nach der Befestigung des Kopfstücks 1 an dem Gehäuse bleibt die Lage des Dichtrings 7 unverändert. Durch Drehen der Spindel 2 wird die zweite Ventilsitzscheibe 6 bezogen auf die erste Ventilsitzscheibe 5 in Anlage miteinander gedreht, sodaß die Durchtrittsöffnung 51 in der ersten Ventilsitzscheibe 5 durch die zweite Ventilsitzscheibe 6 vollständig oder im gewünschten Maß geöffnet und geschlossen wird. Beim Drehen der Spindel 2 aus der Schließstellung des Ventiloberteils in die Offenstellung gelangt zuerst der Ansatz 64 der Durchtrittsöffnung 61 in der Ventilsitzscheibe 6 in den Bereich der Durchtrittsöffnung 51 der anderen Ventilsitzscheibe 5. Dabei wird nur ein minimaler Durchtrittsquerschnitt frei. Mit Beginn der Öffnungs-Bewegung ist also eine feine Steuerung der Menge des durchtretenden Wassers möglich. Beim Weiterdrehen der Spindel 2 kommen nach und nach die Durchtrittsöffnungen 51, 61 zur Deckung. In der über den Quersteg 25 und die Nasen 11 begrenzten Entstellung - vollständige Öffnung - liegen beide Durchtrittsöffnungen 51, 61 vollständig deckungsgleich. Der Ansatz 64 ist seinerseits an der Durchtrittsöffnung 51 vorbeibewegt und wird durch die erste Ventilsitzscheibe 5 abgedeckt.

Es ist möglich, beide Durchtrittsöffnungen 61 mit je einem Ansatz 64 zu versehen. Es ist weiterhin möglich, den Ansatz 64 statt an der Durchtrittsöffnung 61 der zweiten - bewegbaren - Ventilsitzscheibe 6 an einer der Durchtrittsöffnungen 51 der ersten Ventilsitzscheibe 5 anzubringen. Auch hier ist es möglich, an jeder der Durchtrittsöffnungen 51 einen Ansatz 64 anzubringen.

Gewerbliche Verwertbarkeit:

Das Ventiloberteil ist Bestandteil von Armaturen, die im Sanitärbereich eingesetzt werden, dient also zur Steuerung der Menge des aus einer Armatur austretenden Wassers. Die Verwendung des Ventiloberteils zur Steuerung anderer Medien, z.B. von Gas, ist möglich.

Die über dem Öffnungswinkel des Ventiloberteils aufgetragene Menge des durchströmenden Mediums ergibt eine im Anfangsbereich zunächst deutlich flachere Kurve bei der Erfindung im Vergleich zu herkömmlichen Ventiloberteilen mit Ventilsitzscheiben ohne Ansatz, um dann parallel zu den Kurven bei herkömmlichen Ventiloberteilen zu verlaufen.

## Patentansprüche

1. Ventiloberteil für Sanitärarmaturen mit einem hülsenartigen Kopfstück (1), an dessen dem Wasserzulauf zugewandter Stirnseite eine Halterung für einen ersten, mit einer Durchtrittsöffnung (51) versehenen Ventilkörper aus keramischem Material vorgesehen ist, und mit einem in dem Kopfstück (1) drehbaren Mitnehmer (3), an dessen dem Wasserzulauf zugewandter Stirnseite ein zweiter mit einer Durchtrittsöffnung (61) versehener als Ventilsitzscheibe (6) aus keramischem Material ausgebildeter Ventilkörper vorgesehen ist, der an der dem Wasserzulauf abgewandten Seite an dem ersten Ventilkörper anliegt und dessen Durchtrittsöffnung (51) durch Drehen des Mitnehmers (3) öffnet oder schließt, wobei die Durchtrittsöffnung (61) der zweiten Ventilsitzscheibe (6) mit einem von der beim Öffnen zuerst von der Durchtrittsöffnung (51) des ersten Ventilkörpers überstrichenen Kante (63) ausgehenden Ansatz (64) versehen ist, der ringförmig ausgebildet ist, dadurch gekennzeichnet, daß auch der erste Ventilkörper als Ventilsitzscheibe (5) ausgebildet ist, in der ebenso wie in der zweiten Ventilsitzscheibe (6) zwei diametral sich gegenüberliegende sektorförmige Durchtrittsöffnungen (51;61) vorgesehen sind, und daß der ringförmige Ansatz (64) , der an wenigstens einer der Durchtrittsöffnungen (51;61) der ersten oder der zweiten Ventilsitzscheibe (5;6) angeformt ist, die Verlängerung der äußeren Begrenzung der sektorförmigen Durchtrittsöffnungen (51;61) bildet.

2. Ventiloberteil nach Anspruch 1, dadurch gekennzeichnet, daß der Öffnungswinkel der sektorförmigen Durchtrittsöffnung (51;61) ca. 75° und der anschließende Winkel, über den sich der ringförmige Ansatz (64) erstreckt, ca. 30° beträgt.

3. Ventiloberteil nach Anspruch 1 oder 2, dadurch gekennzeichnet, daß die Größe der Ventilsitzscheiben (5;6) ebenso wie die ihrer sektorförmigen Durchtrittsöffnungen (51;61) gleich ist.

## Claims

1. An upper valve part for sanitary fittings comprising a sleeve-like headpiece (1), on whose end face facing the water supply a mount is provided for a first valve element made of ceramic material provided with a through opening (51), and with a driving element (3), which is rotatable in the headpiece (1) and on whose end face facing the water supply a second valve element made of ceramic material is provided, which is designed as a valve seat disc (6), is provided with a through opening (61), rests against the first valve element on the side facing away from the water supply and opens or closes the through opening (51) of said first valve element by rotating the driving element (3), the through opening (61) of the second valve seat disc (6) being provided with an annular extension (64) extending from the edge (63) which is firstly covered during opening by the through opening (51) of the first valve element, characterised in that the first valve element is also designed as a valve seat disc (5), in which in the same manner as the second valve seat disc (6) two diametrally opposed sector-shaped through openings (51; 61) are provided, and the annular extension (64), which is formed onto at least one of the through openings (51; 61) of the first or second valve seat disc (5; 6) forms the elongation of the outer boundary of the sector-shaped through openings (51; 61).

2. An upper valve part according to claim 1, characterised in that the opening angle of the sector-shaped through opening (51; 61) is approximately 75° and the adjoining angle, through which the annular extension (64) extends, is approximately 30°.

3. An upper valve part according to claim 1 to 2, characterised in that the size of the valve seat discs (5; 6) as well as that of their sector-shaped through openings (51; 61) are the same.

## Revendications

1. Tête de soupape pour des robinetteries sanitaires, comprenant un élément de tête (1) en forme de douille sur la face frontale dirigée vers l'arrivée d'eau duquel est prévue une fixation pour un premier corps de soupape en matériau céramique muni d'une ouverture de passage (51), et un toc d'entraînement (3) pouvant tourner dans l'élément de tête (1) et sur la face frontale dirigée vers l'arrivée d'eau duquel est prévu un second corps de soupape en matériau céramique muni d'une ouverture de passage (61) et conformé en disque de siège de soupape (6), qui est appliqué, du côté opposé à l'arrivée d'eau, contre le premier corps de soupape et dont l'ouverture de passage (51) est ouverte ou fermée par la rotation du toc d'entraînement (3), l'ouverture de passage (61) du second disque de siège de soupape (6) présentant un talon (64) de conformation annulaire partant de l'arête (63) qui, lors de l'ouverture, est balayé en premier par l'ouverture de passage (51) du premier corps de soupape, **caractérisée en ce** que le premier corps de soupape est, lui aussi, conformé en disque de siège de soupape (5) dans lequel sont prévus, tout comme dans le second disque de siège de soupape (6), deux ouvertures de passage (51; 61) en forme de secteurs diamétralement opposées, et que le talon annulaire (64) conformé sur au moins l'une des ouvertures de passage (51; 61) du premier ou second disque de siège de soupape (5; 6), constitue le prolongement de la périphérie extérieure des ouvertures de passage (51; 61) en forme de secteurs.

2. Tête de soupape selon la revendication 1, caractérisée en ce que l'angle d'ouverture de l'ouverture de passage (51; 61) en forme de secteur est d'environ 75° et que l'angle qui y fait suite et sur lequel s'étend le talon annulaire (64) est d'environ 30°.

3. Tête de soupape selon l'une des revendications 1 ou 2, caractérisée en ce que les disques de siège de soupape (5; 6) tout comme leurs ouvertures de passage (51; 61) sont de dimensions identiques.

# Fig.1

# Fig.2

Profil um 45° gegen den
Uhrzeiger versetzt eingestoßen

(A-B)

(C-D)

## Fig.3

2

## Fig.4

33  3
34  34
31  31

Nocken um 75° gegen
den Uhrzeiger versetzt
anbringen

33  3
32  32
E  F
31  35  31

22  21
2
23
23
23
25

35  3
Fenster um
90° versetzt
32  32
35

(E-F)

Fig.5